# FASCICULE DE BREVET EUROPEEN

(11) **EP 2 922 144 B1**
(45) Date de publication et mention de la délivrance du brevet: **15.06.2016**
(21) Numéro de dépôt: 15150754.8
(22) Date de dépôt: 12.01.2015
(51) Int. Cl.: H01Q 25/02, H01Q 3/04, H01Q 21/28, H01Q 25/00, G01S 7/03, G01S 13/87, G01S 13/78

(54) **Radar secondaire bi-fonction, et système radar comportant un tel radar**
Doppelfunktions-Sekundärradar und Radarsystem, das einen solchen Radar umfasst
Dual-function secondary radar, and radar system comprising such a radar

(30) Priorité: 20.03.2014 FR 1400665
(43) Date de publication de la demande: 23.09.2015
(73) Titulaire: Thales, 92400 Courbevoie (FR)
(72) Inventeur: Billaud, Philippe, 91470 LIMOURS (FR); Carlier, David, 76570 PAVILLY (FR); Hitz, Philippe, 76770 LE HOULME (FR)
(74) Mandataire: Lucas, Laurent Jacques

(56) Documents cités:
- EP-A1- 1 505 407
- EP-A1- 2 431 762
- FR-A1- 2 674 635
- JP-A- S6 288 979
- JP-A- 2007 171 037
- US-A- 5 311 187
- MONDON P: "RADAR DE SURVEILLANCE TYPE S 101", REVUE TECHNIQUE C.F.T.H,, no. 39, 1 décembre 1963 (1963-12-01), page 98, XP001382537,
- "TASR-2020 Tactical Air Surveillance Radar The Next Generation Dual-Use Air Traffic Control and Gapfiller Radar Solution", , 31 décembre 2013 (2013-12-31), pages 1-8, XP055157728, Extrait de l'Internet: URL:http://www.exelisinc.com/solutions/atm radar/Documents/TASR2020.pdf [extrait le 2014-12-10]

## Description

L'invention concerne un radar secondaire bi-fonction, c'est-à-dire ayant par exemple une fonction de surveillance et une fonction de reconnaissance ami/ennemi.

Il existe au moins deux types de radars secondaires, les radars de surveillance, que l'on appellera par la suite radar SSR (« Secondary Surveillance Radar ») et les radars de reconnaissance ami/ennemi (en anglais « Identification friend or foe » ou IFF), que l'on appellera par la suite radar IFF. Ces deux types de radars ont des missions spécifiques très différentes qui influent aussi bien sur leurs structures mécaniques et leurs propriétés électromagnétiques que sur leur traitement du signal.

Les radars SSR dédiés au marché civil de l'ATC (Air Trafic Control), fonctionnant essentiellement en Mode S ont pour mission d'effectuer une surveillance de l'espace aérien selon des exigences de qualité bien définies par les autorités du contrôle aérien. En particulier, les antennes des radars SSR sont classiquement de grande taille (dans la gamme des 9 mètres de large) afin de présenter un faisceau d'illumination étroit pour avoir à la fois :
- Un fort gain ;
- Des lobes secondaires faibles ;
- Une grande précision en azimut.

Cela se fait au détriment du temps d'éclairement des cibles, souvent assez faible et quelque fois incompatible avec les besoins en nombre de coups au but et/ou avec le temps de réponse des protocoles militaires, particulièrement dans le cas de radars ayant une vitesse de rotation élevée. Les radars IFF doivent avoir une grande fiabilité selon les exigences militaires. Les antennes des radars IFF pour le marché militaire sont classiquement de dimension plus faible (environ 4 mètre de large) afin d'avoir à la fois :
- Une dimension inférieure ou de l'ordre de celle de l'antenne du radar primaire militaire ;
- Un temps d'éclairement sur la cible suffisant, même pour des vitesses de rotation d'antenne élevées.

Cela se fait donc au détriment de la précision en azimut car souvent celle du radar primaire prévaut, mais aussi de la portée garantie ainsi que de la résolution.

De plus, les traitements SSR/Mode S et IFF bien qu'utilisant en pratique les mêmes fréquences (1030 MHz à l'émission et 1090 MHz à la réception) sont différents et définis en fonction des missions :
- Pour les radars civils, on effectue une application fiable des protocoles SSR et Mode S complets en haute précision azimutale sur un très grand nombre d'avions avec une forte résolution ;
- Pour les radars militaires, on effectue une application fiable des protocoles IFF Modes 4 et 5 complets en satisfaisant les hautes exigences de fonctionnement en présence de brouilleur sur des cibles a fort pouvoir de manoeuvre.

Malgré ces différences fonctionnelles et structurelles, il y a un besoin du marché pour des radars de surface ayant une double fonction de surveillance SSR/Mode S et de reconnaissance ami/ennemi. Cependant, cette double fonction entraîne :
- Dans le cas de deux radars distincts co-localisés, un fonctionnement simultané au prix de la présence de masques réciproques, de chaque radar vis-à-vis de l'autre, ainsi qu'un coût important apporté par deux infrastructures radars;
- Dans le cas d'un seul radar intégrant les deux fonctions dans un seul sous-système SSR et IFF :
   - Des fonctionnalités dégradées (perte de service de la fonction non active) lors d'un fonctionnement en alternance des fonctions SSR et IFF ;
   - Des performances dégradées (service réduit pour les deux fonctions) pour les deux fonctions SSR et IFF réalisées simultanément par un seul équipement ;
de plus, l'architecture retenue pour le sous-système SSR et IFF nécessite un compromis entre les deux missions du radar, ne donnant le maximum de performance ni pour l'une, ni pour l'autre, conduisant en particulier à une réduction de la vitesse de rotation de l'antenne et/ou une réduction de la distance instrumentée. De plus, la réalisation des reconnaissances ami/ennemi (fonction IFF) induisent la perte de la surveillance (fonction SSR) dans le secteur azimutal de la désignation ayant pour objet la reconnaissance ami/ennemi. En effet, le temps d'éclairement de la cible ne permet pas avec des radars modernes tournant rapidement d'entrelacer dans un même lobe d'antenne les interrogations SSR/Mode S et celles IFF.

Un document US 5 311 187 A décrit un système radar de surveillance comportant un dispositif radar ayant une antenne primaire et au moins un dispositif radar secondaire ayant une antenne SSR/IFF. Un document JP 2007 171037 A divulgue un radar secondaire. Un document FR 2 674 635 divulgue une antenne secondaire de type monopulse.

Un but de l'invention est notamment de permettre la réalisation d'un radar secondaire effectuant, simultanément dans le même tour, les deux fonctions SSR et IFF tout en garantissant l'optimum des performances. A cet effet, l'invention a pour objet un radar secondaire comportant au moins un système d'antennes, un premier sous-ensemble intégrant des moyens d'émission, de réception et de traitement de signaux d'interrogation réalisant une fonction radar de surveillance SSR et un deuxième sous-ensemble intégrant des moyens d'émission, de réception et de traitement de signaux d'interrogation réalisant une fonction radar de reconnaissance ami/ennemi IFF, les deux sous-ensembles fonctionnant simultanément et indépendamment l'un de l'autre, le premier sous-ensemble SSR étant couplé à une première antenne dudit système apte à être mue en rotation via un joint tournant et le deuxième sous-ensemble IFF étant couplé à une deuxième antenne dudit système via ledit joint tournant, les deux antennes étant montées solidairement dos à dos, un élément rayonnant arrière constitutif de la première antenne étant placé dans le plan de la deuxième antenne, un élément rayonnant constitutif de la deuxième antenne étant placé dans le plan de la première antenne. Avantageusement, les deux antennes et les deux-ensembles utilisent par exemple des ressources mécaniques, énergétiques et de génie civil communes.

Les deux sous-ensembles sont par exemple disposés dans une même cabine.

Dans un mode particulier de réalisation, chacune des deux antennes comporte, trois voies de réception, une voie somme Σ, une voie différence Δ et une voie cont Ω, la voie cont étant affectée à l'élément rayonnant arrière les signaux issus desdites voies étant transférés vers les moyens d'émission et de réception desdits sous-ensembles via le joint tournant.

Dans un autre mode de réalisation possible, chacune des deux antennes comporte deux voies de réception, une voie somme Σ, et une voie différence et contrôle Δ/Ω, la voie différence et contrôle étant affectée à l'élément rayonnant arrière, les signaux issus desdites voies étant transférés vers les moyens d'émission et de réception desdits sous-ensembles via le joint tournant.

Ladite première antenne est par exemple du type LVA et ladite deuxième antenne est du type poutre, d'autres combinaisons étant possibles.

Ledit radar comporte par exemple un plan de masse et/ou un absorbant hyperfréquence séparant les deux antennes, l'isolation entre les deux antennes étant accrue par ledit plan de masse et/ou ledit absorbant hyperfréquence.

Lesdits sous-ensembles émettent par exemple des signaux d'interrogation de façon asynchrone entre les signaux d'interrogation émis par un sous-ensemble par rapport aux signaux d'interrogation émis par l'autre sous-ensemble.

Indépendamment, le premier sous-ensemble réalise par exemple une fonction de surveillance Mode S et le deuxième sous-ensemble réalise une fonction de reconnaissance ami/ennemi IFF.

L'invention a également pour objet un système radar comportant un radar primaire et un radar secondaire, le radar secondaire étant un radar secondaire tel que décrit précédemment.

Dans un mode de réalisation possible, l'antenne du premier sous-ensemble dudit radar secondaire réalisant la fonction de surveillance est pointée dans la même direction que l'antenne primaire, ledit système ayant une fonction principale de surveillance.

Dans un autre mode de réalisation possible, l'antenne du deuxième sous-ensemble dudit radar secondaire réalisant la fonction de reconnaissance ami/ennemi est pointée dans la même direction que l'antenne primaire, ledit système ayant une fonction principale de reconnaissance ami/ennemi.

D'autres caractéristiques et avantages de l'invention apparaîtront à l'aide de la description qui suit faite en regard de dessins annexés qui représentent :
- La figure 1, par un synoptique un exemple d'architecture de radar civil ATC selon l'art antérieur dans le cas d'un radar SSR/Mode S couplé à un radar primaire ;
- La figure 2, un exemple de réalisation d'antennes primaire et secondaire correspondant à l'architecture de radar ATC de la figure 1 ;
- La figure 3, par un synoptique un exemple d'architecture de radar militaire selon l'art antérieur dans le cas d'un radar secondaire IFF couplé à un radar primaire ;
- La figure 4, un exemple de réalisation d'antennes primaire et secondaire correspondant à l'architecture de radar militaire de la figure 3 ;
- La figure 5, un exemple de réalisation du système d'antennes SSR et IFF d'un radar secondaire SSR et IFF selon l'invention ;
- La figure 6, un synoptique de principe de réalisation d'un radar secondaire SSR et IFF selon l'invention ;
- La figure 7, un exemple de réalisation d'un radar de surveillance primaire couplé à un radar secondaire selon l'invention dans une configuration à dominante civile, configuration notée PSR + SSR & IFF par la suite ;
- La figure 8, un exemple de réalisation d'un radar de surveillance primaire couplé à un radar secondaire selon l'invention dans une configuration à dominante militaire, configuration notée PSR + IFF & SSR par la suite ;

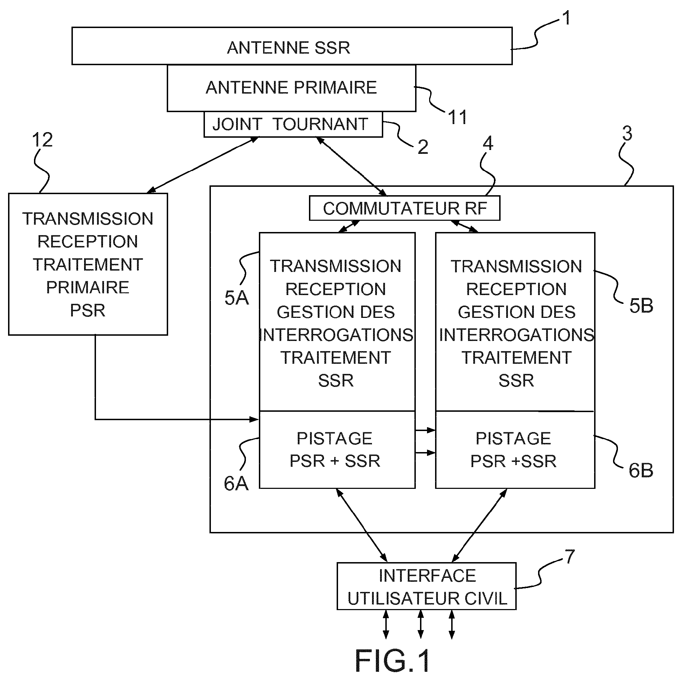

La figure 1 présente par un synoptique un exemple d'architecture selon l'art antérieur d'un radar ATC secondaire SSR/Mode S couplé à un radar primaire civil comportant une antenne primaire 11 et des moyens d'émission et de réception et de traitement primaire 12. Le radar secondaire SSR comporte :
- Une antenne 1, dite secondaire SSR, assurant le rayonnement des interrogations SSR/Mode S et la captation des réponses issues des transpondeurs des aéronefs;
- l'antenne secondaire SSR 1 et l'antenne 11 du radar primaire militaire étant pointées dans la même direction afin de permettre la détection simultanée des cibles par les deux sous-systèmes radars PSR et SSR;
- Un joint tournant 2 assurant le passage des signaux RF entre les antennes 1, 11 et les fonctions d'émission et de réception, comportant par exemple trois galettes RF dans la bande L pour le passage des voies Σ, Δ, Ω que l'on évoquera par la suite ;
- Une baie 3 pour l'équipement secondaire (redondé dans ce synoptique en exemple) comportant un commutateur hyperfréquence 4 et deux unités 5A, 5B, 6A, 6B. Le commutateur 4 permet de guider les signaux RF issus du joint tournant vers, ou depuis, les deux unités identiques 5A, 5B fonctionnant de manière indépendante pour assurer la redondance, chaque unité effectuant les différentes fonctions suivantes dédiées à la fonction SSR/Mode S :
   - Un générateur de signal élaborant les interrogations SSR/Mode S en fonction des tâches à effectuer avec les cibles prédites présentes dans le lobe principal ;
   - Un émetteur qui convertit en signaux RF de forte puissance les interrogations à rayonner par l'antenne ;
   - Un récepteur qui démodule les signaux RF reçus par l'antenne ;
   - Un traitement du signal opérant sur les réponses reçues dans le lobe principal de l'antenne ;
   - Un extracteur qui constitue un plot à partir des détections élémentaires (réponses).

Classiquement, chaque unité 5A, 5B inclut aussi les ressources redondées communes aux traitements de données primaire et secondaire suivants 6A, 6B :
- Une fonction d'association et de pistage des plots primaire PSR et secondaire SSR;
- Une gestion des déports et de la supervision notamment.

Les sorties des unités 6A, 6B sont reliées via des interfaces redondées 7 à des moyens de visualisation et/ou de commande ou contrôle, notamment pour des utilisateurs civils.

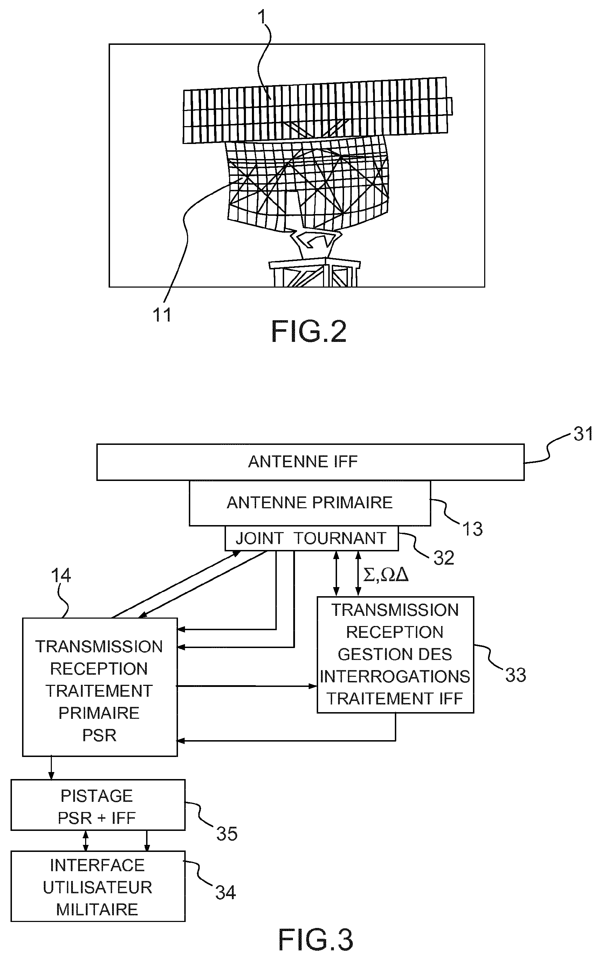

La figure 2 présente un exemple de réalisation d'antennes primaire et secondaire correspondant à l'architecture de la figure 1. L'antenne secondaire SSR 1, placée au-dessus de l'antenne primaire 11, est pointée dans la même direction que cette dernière. L'antenne secondaire SSR 1 est classiquement composée d'un réseau de barres d'éléments rayonnants disposés parallèlement à la verticale construisant une large ouverture verticale, encore appelée LVA par la suite, permettant de déporter l'énergie rayonnée en élévation afin de réduire les effets des réflexions sol (typiquement son envergure est de l'ordre de 9 mètres pour une hauteur de 1 mètre).

La figure 3 présente par un synoptique un exemple d'architecture selon l'art antérieur d'un radar secondaire IFF militaire couplé à un radar primaire. Le radar IFF comporte classiquement :
- Une antenne 31, dite secondaire IFF, par exemple de type poutre, assurant le rayonnement des interrogations IFF et la captation des réponses issues des transpondeurs à bord des aéronefs ;
- l'antenne secondaire IFF 31 et l'antenne 13 du radar primaire pointant dans la même direction afin de permettre la détection simultanée des cibles par les 2 sous-systèmes radars PSR et IFF;
- Un joint tournant 32 assurant le passage des signaux entre les antennes 1, 11 et les fonctions d'émission et de réception , comportant par exemple trois galettes RF dans la bande L pour le passage des voies Σ, Δ, Ω ;
- Un équipement IFF 33 incluant les fonctions non redondées de transmission, de réception, de génération de signaux, de traitement du signal et d'extraction des plots, dans cet exemple ces fonctions n'étant pas redondées.

L'équipement primaire 14 reçoit la position d'antenne des encodeurs et diffuse la rotation de l'antenne à l'équipement IFF 33.

Un module 35 effectuant notamment la fonction de pistage est connecté en sortie de l'équipement primaire 14 et du l'équipement IFF 33. Les sorties de ce module 35 sont reliées via des interfaces 34 à des moyens de visualisation et/ou de contrôle, notamment pour des utilisateurs militaires. L'architecture de la figure 3 montre que la fonction IFF du radar secondaire est combinée avec les fonctions du radar primaire.

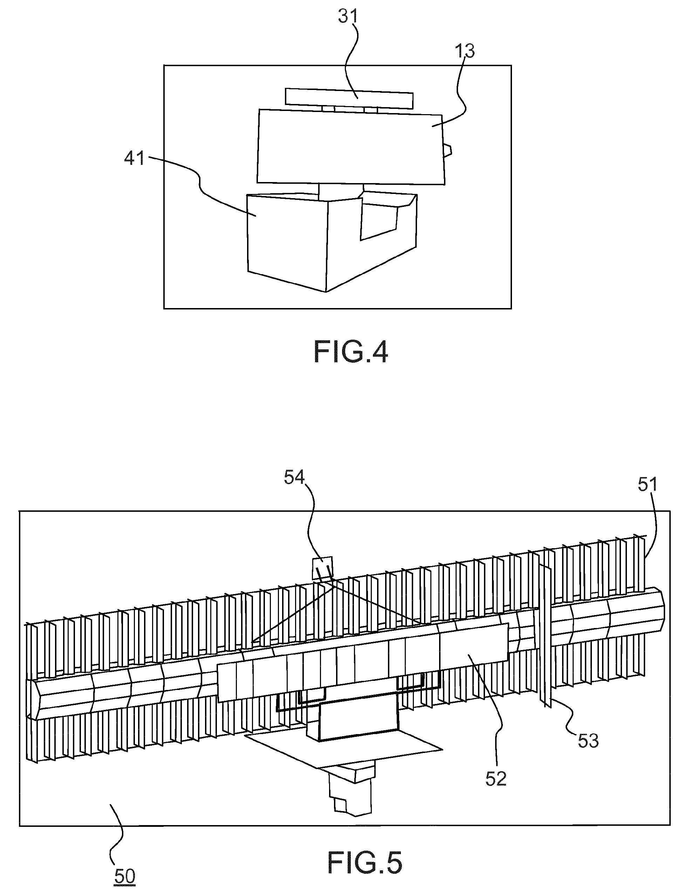

La figure 4 présente un exemple de réalisation d'antennes primaire et secondaire correspondant à l'architecture de la figure 3. L'antenne secondaire IFF 31, placée au-dessus de l'antenne primaire 13, est pointée dans la même direction que cette dernière, l'ensemble étant monté sur une cabine 41 comportant les moyens d'émission, de réception et de traitement décrits relativement à la figure 3. L'antenne secondaire IFF est classiquement du type poutre, ayant par exemple une envergure de 4 mètres, afin d'assurer dans un volume réduit à la fois un lobe rayonné principal assez large dans le plan horizontal pour avoir l'éclairement de la cible nécessaire aux protocoles IFF mais aussi les détections de cibles à haute élévation.

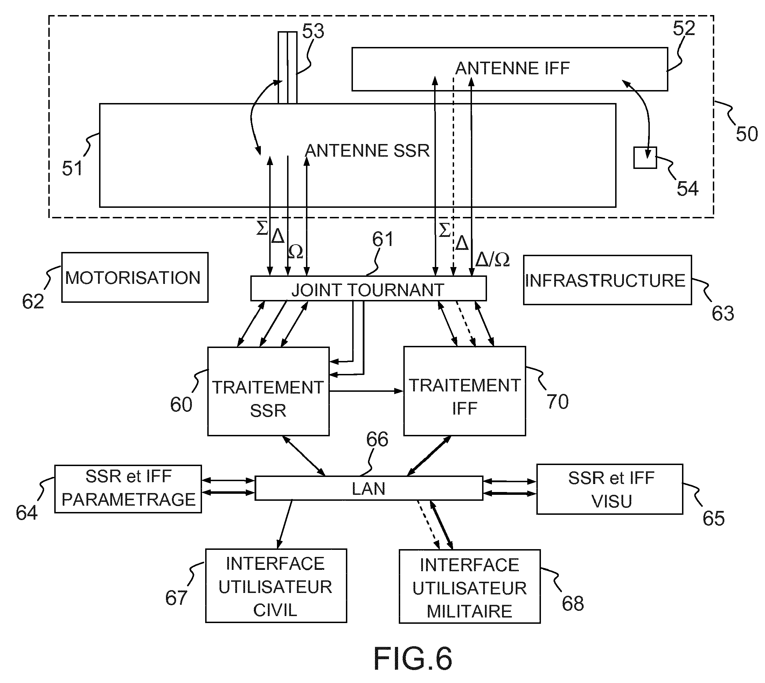

Les figures 5 et 6 illustrent un exemple de réalisation d'un radar selon l'invention. Un tel radar associe les modes de radar secondaire précédemment décrits, le mode SSR, mode S, et le mode IFF. Plus précisément, il comporte un sous-ensemble réalisant la fonction de surveillance, couplé à une première antenne, et un sous-ensemble réalisant la fonction de reconnaissance ami/ennemi IFF, couplé à une deuxième antenne, les deux sous-ensembles fonctionnant simultanément et indépendamment l'un de l'autre.

La figure 5 illustre en tant qu'exemple plus particulièrement la structure du système d'antennes secondaires 50 d'un radar selon l'invention, c'est-à-dire l'antenne associée aux fonctions de radar secondaire SSR et IFF. Le système d'antennes 50 est constitué par la première antenne 51 dédiée à la fonction SSR et par la deuxième antenne 52 dédiée à la fonction IFF, les deux antennes étant montées solidairement dos à dos, c'est-à-dire que leur lobe principal est pointé dans des directions opposées. Le système d'antennes 50 est par exemple une combinaison d'antennes du type LVA-poutre. En d'autres termes, la première antenne est par exemple du type de celle de la figure 2, c'est-à-dire composée d'un réseau de barres rayonnantes, et la deuxième antenne est par exemple du type de celle de la figure 4, du type poutre. L'invention permet cependant toute autre combinaison de type d'antennes : notamment LVA-LVA ou poutre-poutre avec d'autres dimensions d'antenne en cohérence avec la mission des deux radars SSR et IFF.

Une barre 53, un élément rayonnant, constitutive de l'antenne SSR 51 est disposée dans le plan frontal de l'antenne IFF 52. Cet élément rayonnant 53, situé à l'arrière du panneau principal de l'antenne secondaire SSR, permet d'effectuer une fonction de contrôle pour le mode SSR, notamment en ce qui concerne la situation géographique des transpondeurs captés. De même, une pièce 54, constitutive de l'antenne secondaire IFF 52 est disposée dans le plan frontal de l'antenne SSR 51, permet d'effectuer une fonction de contrôle pour le mode IFF.

La figure 6 illustre de façon synoptique l'ensemble du radar secondaire SSR et IFF, englobant les fonctions radar SSR et IFF, fonctionnant de façon indépendante, découplée et simultanée. Pour des raisons de simplification, les deux antennes secondaires SSR 51,53 et IFF 52,54 sont représentées comme si elles appartenaient au même plan vertical. La fonction SSR et la fonction IFF partagent plusieurs ressources.
Les fonctions ou composants partagés sont notamment :
- le joint tournant 61 pour la transmission des signaux hyperfréquence entre les antennes et la partie fixe de l'équipement;
- la motorisation 62 pour la rotation des éléments tournants 51, 52,53,54;
- l'infrastructure de support mécanique et de gestion de l'énergie 63 ;
- le génie civil du radar
- les outils de paramétrage 64 des deux fonctions radar ;
- les moyens de visualisation 65 pour l'affichage ;
- un réseau de communication local 66 ;
- des interfaces 67, 68 vers les utilisateurs civils, pour la surveillance aérienne ATC, et les utilisateurs militaires, pour la reconnaissance ami/ennemi .

Ces ressources sont partagées avec la baie SSR 60 et la baie IFF 70, ces baies 60, 70 réalisant respectivement les fonctions SSR et IFF en coopération avec les antennes secondaires SSR et IFF auxquelles elles sont couplées via le joint tournant. Les antennes comportent par exemple chacune :
- une voie somme Σ, pour la détection ;
- une voie différence Δ, pour la fonction monopulse ;
- et une voie Ω pour la fonction de blocage, transmise par les éléments ou barres arrière 53, 54 des antennes secondaires 51, 52.

Les signaux reçus par ces trois voies sont transmis via le joint tournant 61 aux baies SSR 60 et IFF 70. Le sous-ensemble 60 affecté à la fonction SSR comporte ses moyens propres d'émission, de réception et de traitement permettant de réaliser cette fonction, par exemple selon l'architecture illustrée par la figure 1. De même, le sous-ensemble 70 affecté à la fonction IFF comporte ses moyens propres lui permettant de réaliser cette fonction, par exemple selon l'architecture de la figure 3. Au-delà de ces moyens propres, les deux sous-ensembles partagent des ressources comme indiqué ci-dessus.

Finalement, avantageusement chacune des deux antennes 51, 52 peut comporter indépendamment soit trois voies de réception, une voie somme (Σ), une voie différence (Δ) et une voie contrôle (Ω), la voie contrôle étant affectée pour partie à l'élément rayonnant arrière 53, 54, soit deux voies de réception, une voie somme (Σ), et une voie différence/contrôle (Δ/Ω), la voie différence/contrôle étant affectée pour partie à l'élément rayonnant arrière 53, 54 les signaux issus desdites voies étant transférés vers les moyens d'émission et de réception desdits sous-ensembles via le joint tournant.

Un radar secondaire SSR et IFF selon l'invention, associant ainsi les fonctions radar SSR et IFF apporte notamment les avantages suivants :
- indépendance d'utilisation, réalisant les fonctions SSR et IFF avec une même partie tournante, incluant deux éléments rayonnants principaux, permettant la surveillance ATC et la reconnaissance ami/ennemi simultanément
- indépendance des fonctions SSR et IFF sans pénalisation par des masquesde visibilité :
- adaptation pour l'optimisation des performances à la mission du radar, à la fois SSR et IFF, en particulier :
   o réglage indépendant des radars puisque physiquement différents, seule la vitesse de rotation étant commune ;
   o adaptation à la mission du radar selon différents angles :
      ▪ tant au niveau antennaire
         o civil : classiquement LVA de grande dimension de la première antenne 51 pour accroître la précision et réduire la fausse alarme
         o militaire : classiquement poutre de moyenne dimension pour la deuxième antenne 52 pour s'adapter au protocole IFF
      • que du type de cibles d'intérêt :
         o civil : forte densité de cibles dans un secteur donné peu évolutives, requérant principalement une grande résolution ;
         o militaire : la forte évolution des cibles militaires peut être prise en compte par la fonction radar IFF sans dégrader la fausse alarme ni la latence requises en ATC pour un radar SSR;
   o adaptation aux caractéristiques spécifiques des 2 protocoles :
      ▪ de surveillance SSR et/ou Mode S :
         o précision, pas d'interaction entre modes civil et militaire conduisant à des réductions de distance instrumentée pour faire les interrogations civil et militaire ;
         o mais aussi certification par les organismes officiels acquise indépendamment
      ▪ de reconnaissance ami/ennemi IFF via les Mode 4 et/ou Mode 5
         o avec un temps d'éclairement sur la cible totalement alloué à la reconnaissance ami/ennemi ;
         o mais aussi certification par certains organismes acquise indépendamment
   o adaptation aux attendus des utilisateurs qui peuvent être quelquefois opposés :
      ▪ civil : fiabilité de l'information : pas de faux codes C (altitude), pas de fausse détection, traitement de forte densité de cibles localisées
      ▪ militaire : forte réactivité : diffusion rapide des détections (pas de filtrage par un pistage, pas d'association avec un PSR, ..),
         lien de contrôle (paramétrage du radar reconfigurable) et de déport dédié,
         réjection des brouilleurs (pouvant générer de fortes charges), notamment.
- indépendance au niveau de la logistique (hors partie aérien) :
   o pas de perte de service d'un radar lors de la maintenance préventive / corrective de l'autre radar
   o pas de dégradation du MTBF (temps d'utilisation sans pannes) d'une fonction radar par ajout d'une fonction pour l'autre fonction radar (l'apport du Mode 5 nécessitant une forme d'onde très spécifique au travers d'une modulation en émission et en réception différente du Mode 4/SSR/Mode S)
   o pas de requalification d'une fonction radar en cas d'évolution de l'autre fonction radar prenant en compte :
      ▪ des correctifs du protocole Mode S ;
      ▪ des changements dans le protocole Mode 5 très récent ;
- les coeurs des fonctions (SSR/Mode S en civil et IFF en militaire) partagent les mêmes ressources du radar comme le montre la figure 6, en ce qui concerne notamment le génie civil 63 (pylône, bâtiment ou cabine, gestion de l'énergie), la motorisation 62 pour rotation, l'affichage 65 et le paramétrage 64 en local.

L'antenne secondaire SSR et IFF 50 peut être associée à une antenne primaire non représentée. Selon le mode de réalisation, c'est l'antenne secondaire SSR 51 ou l'antenne secondaire IFF 52 qui est pointée dans la même direction que l'antenne primaire. Dans le premier cas, avec l'antenne primaire et l'antenne secondaire SSR pointant dans la même direction, le système complet composé du radar primaire et secondaire a une fonction essentiellement de surveillance ATC, tout en réalisant la reconnaissance ami/ennemi IFF. Dans le second cas, avec l'antenne primaire et l'antenne secondaire IFF pointant dans la même direction an, le système complet a une fonction essentiellement de reconnaissance ami/ennemi avec une fonction complémentaire de surveillance de l'espace aérien.

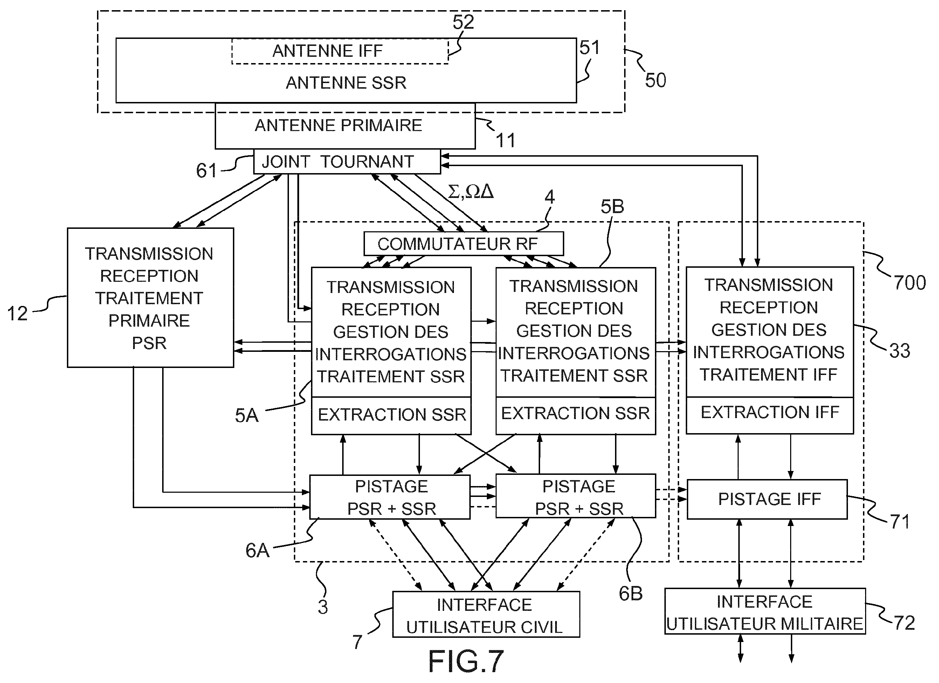

La figure 7 illustre un exemple d'architecture d'un système PSR+SSR&IFF avec un radar primaire et un radar secondaire SSR et IFF, le radar secondaire étant réalisé selon l'invention. Dans cet exemple, le système est à dominante civile (fonction de surveillance). Le radar primaire est du même type 11, 12 que celui de la figure 1. Le radar secondaire SSR et IFF combine les deux fonctions radar secondaires décrites aux figures 1 et 3. En ce qui concerne l'antenne 50, elle combine dos à dos les deux antennes 52, 54, 51, 53, l'antenne secondaire SSR 51 étant pointée dans la même direction que l'antenne primaire 11. Le radar secondaire SSR et IFF comporte une baie 3 pour la fonction radar secondaire de surveillance, du type de celle décrite à la figure 1 (avec ici une fonction redondée comme exemple), et comporte par ailleurs une baie 700 pour la fonction radar de reconnaissance ami/ennemi . Cette fonction nécessite cependant une adaptation par rapport à la fonction radar secondaire décrite à la figure 3. La baie 700 comporte un équipement 33 complété par un pistage 71, effectué par un calculateur et relié à l'interrogateur et à une interface 72 pour la visualisation et l'exploitation des informations IFF, notamment pour des utilisateurs civils.
Les deux baies 3, 700 sont reliées à l'antenne 50 via le joint tournant 61. Dans cette configuration, à application civile dominante, complétée par une fonction de reconnaissance ami/ennemi , l'architecture radar doit notamment :
- ne pas modifier la fonction de surveillance pour des besoins de type militaire (interrogation IFF) afin de conserver la qualification de sécurité (fiabilité des informations diffusées par le radar appelé usuellement safety) ;
- intégrer l'interrogateur IFF dans l'univers civil du contrôle aérien, en ce qui concerne notamment la supervision, les interfaces et le paramétrage ;
- diffuser aux utilisateurs civil et militaire leurs données d'intérêt, Avantageusement, partant d'une architecture du type de celle de la figure 1, les adaptations à réaliser sont relativement simple à mettre en oeuvre, sans augmentation significative de la complexité du système et de l'encombrement, cette adaptation pouvant être qualifiée de légère.

Les évolutions à appliquer sont par exemple les suivantes :
- au niveau aérien :
   - réalisation de l'antenne secondaire 50 combinant dos à dos les deux antennes secondaires 51, 52, 53, 54 l'antenne secondaire SSR 51 étant pointée dans la même direction que l'antenne primaire 11 ;
   - ajout au joint tournant de trois voies en bande L, pour le passage des voies Σ, Δ, Ω.
- au niveau du bâtiment, ou de la cabine ;
   - ajout d'une baie 700 dédiée à la fonction IFF incluant :
      - l'équipement IFF ;
      - le pistage 71 ;
   - adaptation de la puissance électrique disponible.

Les autres ressources sont partagées comme indiqué relativement à la figure 6 décrivant le principe de réalisation d'un radar secondaire selon l'invention.

Une fonction à développer se situe notamment dans le calculateur 71 effectuant principalement le pistage, notamment pour qu'il puisse être interfacé avec les centres de contrôle aérien civils ATC.

La localisation de la fonction de réconnaissance ami/ennemi IFF dans une baie dédiée 700 permet à la fois :
- de traiter les exigences CEM sans conséquence sur le produit standard ;
- d'ajouter une fonction IFF pour redonder celle décrite à la figure 7.

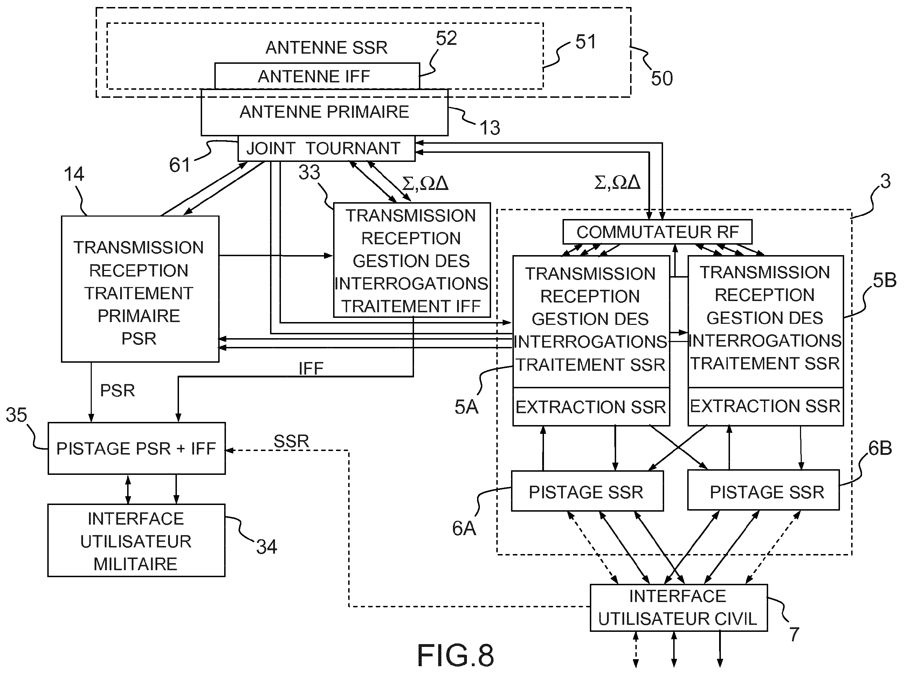

La figure 8 illustre un exemple d'architecture d'un système PSR+IFF&SSR avec un radar primaire et un radar secondaire, le radar secondaire étant réalisé selon l'invention. Dans cet exemple, le système est à dominante militaire (fonction de reconnaissance ami/ennemi). Le radar primaire est du même type 13, 14 que celui de la figure 3. Le radar secondaire SSR et IFF combine les deux fonctions de radar secondairedécrites aux figures 1 et 3. Le radar secondaire comporte la baie 3 pour la fonction de surveillance comme décrit dans la figure 1 et l'équipement 33 pour la fonction IFF. Les adaptations sont sensiblement analogues à celles demandées pour l'exemple précédent, le calculateur 71 n'étant plus nécessaire.Dans un mode de réalisation particulier, les données de position SSR en sortie de l'interface 7 sont par exemple transmises au module de pistage PSR 35, permettant de constituer une information radar synthétisée en un seul message. En ce qui concerne l'antenne 50, elle combine dos à dos les deux antennes 52, 54, 51, 53 l'antenne secondaire IFF 52 étant pointée dans la même direction que l'antenne primaire 13. L'architecture du système de la figure 8 doit notamment ne pas modifier la fonction de reconnaissance ami/ennemi pour des besoins de type civil.

Quel que soit l'exemple de réalisation, intrinsèquement le fonctionnement simultané de la fonction SSR et de la fonction IFF entraîne :
- un couplage hyperfréquence entre les deux sous-systèmes SSR/Mode S et IFF.
- un blocage des transpondeurs au niveau des avions.

Etant donné que les deux fonctions radar secondaire fonctionnent simultanément, pour garantir l'indépendance il faut donc assurer l'isolation entre les deux fonctions pour qu'elles ne se perturbent pas l'une l'autre, cette isolation pouvant être assurée en plusieurs endroits du radar. Les perturbations entre les deux fonctions peuvent se produire au moins :
- par un couplage des deux antennes 51, 53 et 52, 54 ;
- par un couplage au niveau du joint tournant 61 qui laisse passer les signaux SSR et les signaux IFF ;
- par un couplage au niveau des équipements SSR et IFF, plus particulièrement au niveau de l'émission et de la réception des signaux, une émission SSR pouvant perturber une réception IFF et vice versa.

Pour assurer l'indépendance des fonctions SSR et IFF afin de permettre un fonctionnement simultané (appelé mode duplex) et donc annuler la pollution des interrogations effectuées pendant les périodes d'écoute en réception, un radar selon l'invention comporte par exemple un filtre additionnel dans chaque chaîne de réception, cela étant appliqué pour chaque voie Σ, Δ, Ω. Le filtre est par exemple inséré entre le commutateur hyperfréquence 4 et le récepteur de chaque voie. Si les voies d'émission et de réception sont séparées par un circulateur, le filtre est placé à l'entrée de la voie de réception, en sortie du circulateur. En pratique, pour une interrogation à 1030 MHz on ajoute un filtre réjecteur à 1030 MHz dans la chaîne de réception à 1090 MHz.

Le montage dos à dos des antennes 51, 52 peut provoquer un blocage des transpondeurs, cela étant dû notamment à la fuite arrière d'une antenne qui se superpose au lobe principal de l'autre antenne. En effet, le comportement des transpondeurs est tel que les avions présents dans l'espace aérien situé au dos d'une antenne reçoivent les interrogations SSR ou Mode S par les fuites de la voie somme Σ mais n'y répondent pas car ils sont bloqués en « temps mort » grâce à l'ISLS émis respectivement par la face rayonnante 51, 52 pour les cibles frontales en dehors du lobe principale et les barres 53, 54 pour les cibles arrières:
- suite à la réception d'une impulsion P2 sur la voie Ω pour une interrogation SSR inférieure à 35 µs à ± 10 µs ;
- suite à la réception d'une impulsion P5 sur la voie Ω pour une interrogation Mode S inférieure à 45 µs.

En conséquence, si une interrogation SSR ou Mode S ou IFF est émise dans cet intervalle « temps mort » par l'autre antenne en direction de la cible, celle-ci n'est pas interprétée par tous les transpondeurs des avions face à cette antenne utile et en distance proche du radar selon le niveau des fuites, en raison du blocage effectué par la voie Ω. Par la suite, pour toutes ces cibles il y a manque de réponse sur la récurrence concernée.

Le champ rayonné par fuite au dos d'une antenne est en niveau absolu, assez faible, souvent de l'ordre de 30 à 40 dB inférieur au champ rayonné maximal dans l'axe principal de l'antenne. En conséquence, seules les cibles très proches du radar peuvent potentiellement se bloquer au cas où les interrogations des radars secondaires SSR et IFF seraient espacées de moins de 45 µs.

Pour réduire les fuites de la voie somme de chaque antenne, un radar selon l'invention comporte par exemple un plan de masse ou un absorbant entre les deux antennes.Ceci permet de réduire avantageusement le volume de surveillance autour du radar dans lequel un blocage du transpondeur peut se produire

Par nature, classiquement la présence de la fonction dite de vobulation de la fréquence de répétition des interrogations de chacun des radars secondaires SSR et IFF assure que les cas de blocage ne pourront avoir lieu qu'une seule fois par lobe d'antenne. Comme cet ordre de grandeur est déjà pris en compte dans les algorithmes des extracteurs SSR et IFF usuels, le phénomène sera sans effet au niveau des performances des radars secondaires SSR et IFF.

Dans le cas où la vobulation de la fréquence de répétition serait absente, on peut garantir un fonctionnement le plus asynchrone possible des deux traitements SSR et IFF en introduisant un écart temporel entre les périodes d'interrogation SSR et IFF supérieur à 50 µs, ce qui statistiquement provoquera au plus un cas de blocage par lobe d'antenne. De par les caractéristiques des protocoles SSR/mode S et IFF, la suppression complète du phénomène de blocage n'est pas envisageable de façon temporelle car elle induirait des temps morts dans le séquencement réciproque de chacun des deux sous-systèmes radars SSR et IFF leur faisant perdre toute efficacité. Il est au contraire préférable d'assurer un réglage des deux sous-systèmes permettant par un asynchronisme maximal de réduire le taux d'occurrence du phénomène de blocage.

## Revendications

1. Radar secondaire, **caractérisé en ce qu'**il comporte au moins un système d'antennes (50), un premier sous-ensemble (60) intégrant des moyens d'émission, de réception et de traitement de signaux d'interrogation réalisant une fonction radar de surveillance SSR et un deuxième sous-ensemble (70) intégrant des moyens d'émission, de réception et de traitement de signaux d'interrogation réalisant une fonction radar de reconnaissance ami/ennemi IFF, les deux sous-ensembles (60, 70) fonctionnant simultanément et indépendamment l'un de l'autre, le premier sous-ensemble SSR étant couplé à une première antenne (51) dudit système (50) apte à être mue en rotation via un joint tournant (61), et le deuxième sous-ensemble IFF étant couplé à une deuxième antenne (52) dudit système (50) via ledit joint tournant, les deux antennes (51, 52) étant montées solidairement dos à dos, un élément rayonnant arrière (53) constitutif de la première antenne (51) étant placé dans le plan de la deuxième antenne (52), un élément rayonnant (54) constitutif de la deuxième antenne (52) étant placé dans le plan de la première antenne (51).

2. Radar secondaire selon la revendication 1, **caractérisé en ce que** les deux antennes (51, 52) et les deux-ensembles (60, 70) utilisent des ressources mécaniques, énergétiques et de génie civil communes.

3. Radar secondaire selon l'une quelconque des revendications précédentes, **caractérisé en ce que** les deux sous-ensembles (60, 70) sont disposés dans une même cabine.

4. Radar secondaire selon l'une quelconque des revendications précédentes, **caractérisé en ce que** chacune des deux antennes (51, 52) comporte, trois voies de réception, une voie somme (Σ), une voie différence (Δ) et une voie cont Ω), la voie cont étant affectée à l'élément rayonnant arrière (53, 54), les signaux issus desdites voies étant transférés vers les moyens d'émission et de réception desdits sous-ensembles via le joint tournant (61).

5. Radar secondaire selon l'une quelconque des revendications précédentes, **caractérisé en ce que** chacune des deux antennes (51, 52) comporte deux voies de réception, une voie somme (Σ), et une voie différence et contrôle (Δ/Ω), la voie différence et contrôle étant affectée à l'élément rayonnant arrière (53, 54), les signaux issus desdites voies étant transférés vers les moyens d'émission et de réception desdits sous-ensembles via le joint tournant (61).

6. Radar selon l'une quelconque des revendications précédentes, **caractérisé en ce que** ladite première antenne (51) est du type LVA et ladite deuxième antenne (52) est du type poutre.

7. Radar selon l'une quelconque des revendications 1 à 5, **caractérisé en ce que** ladite première antenne (51) est du type LVA et ladite deuxième antenne (52) est du type LVA.

8. Radar selon l'une quelconque des revendications 1 à 5, **caractérisé en ce que** ladite première antenne (51) est du type poutre et ladite deuxième antenne (52) est du type poutre.

9. Radar secondaire selon l'une quelconque des revendications précédentes, **caractérisé en ce qu'**il comporte un plan de masse et/ou un absorbant hyperfréquence séparant les deux antennes (51, 52), l'isolation entre les deux antennes (51, 52) étant accrue par ledit plan de masse et/ou ledit absorbant hyperfréquence.

10. Radar secondaire selon l'une quelconque des revendications précédentes, **caractérisé en ce que** lesdits sous-ensembles (60, 70) émettent des signaux d'interrogation (91, 92), de façon asynchrone entre les signaux d'interrogation émis par un sous-ensemble (60) par rapport aux signaux d'interrogation émis par l'autre sous-ensemble (70).

11. Radar secondaire selon l'une quelconque des revendications précédentes, **caractérisé en ce que** indépendamment le premier sous-ensemble (51, 53, 61, 60) réalise une fonction de surveillance Mode S et le deuxième sous-ensemble (52, 54, 61,70) réalise une fonction de reconnaissance ami/ennemi IFF.

12. Système radar comportant un radar primaire (11,13) et un radar secondaire, **caractérisé en ce que** le radar secondaire est un radar secondaire selon l'une quelconque des revendications précédentes.

13. Système radar selon la revendication 12, **caractérisé en ce que** l'antenne (51) du premier sous-ensemble (60) dudit radar secondaire réalisant la fonction de surveillance est pointée dans la même direction que l'antenne primaire (11), ledit système ayant une fonction principale de surveillance.

14. Système radar selon la revendication 12, **caractérisé en ce que** l'antenne (52) du deuxième sous-ensemble (70) dudit radar secondaire réalisant la fonction de reconnaissance ami/ennemi est pointée dans la même direction que l'antenne primaire (13), ledit système ayant une fonction principale de reconnaissance ami/ennemi.

## Patentansprüche

1. Sekundärradar, **dadurch gekennzeichnet, dass** es Folgendes umfasst: wenigstens ein Antennensystem (50), eine erste Subbaugruppe (60), die Mittel zum Senden, zum Empfangen und zum Verarbeiten von Abfragesignalen beinhaltet, die eine Überwachungsradarfunktion SSR ausführen, und eine zweite Subbaugruppe (70), die Mittel zum Senden, zum Empfangen und zum Verarbeiten von Abfragesignalen beinhaltet, die eine Freund/Feind-Erkennungsradarfunktion IFF ausführen, wobei die beiden Subbaugruppen (60, 70) gleichzeitig und unabhängig voneinander arbeiten, wobei die erste Subbaugruppe SSR mit einer ersten Antenne (51) des Systems (50) gekoppelt ist, die über ein Drehgelenk (61) in Drehung versetzt werden kann, und die zweite Subbaugruppe IFF mit einer zweiten Antenne (52) des Systems (50) über das Drehgelenk gekoppelt ist, wobei die beiden Antennen (51, 52) Rücken an Rücken fest montiert sind, wobei ein hinteres Strahlungselement (53), das einen Bestandteil der ersten Antenne (51) darstellt, in der Ebene der zweiten Antenne (52) platziert ist, wobei ein Strahlungselement (54), das einen Bestandteil der zweiten Antenne (52) darstellt, in der Ebene der ersten Antenne (51) platziert ist.

2. Sekundärradar nach Anspruch 1, **dadurch gekennzeichnet, dass** die beiden Antennen (51, 52) und die beiden Subbaugruppen (60, 70) übliche mechanische, energetische und bautechnische Ressourcen nutzen.

3. Sekundärradar nach einem der vorherigen Ansprüche, **dadurch gekennzeichnet, dass** die beiden Subbaugruppen (60, 70) in einer selben Kabine angeordnet sind.

4. Sekundärradar nach einem der vorherigen Ansprüche, **dadurch gekennzeichnet, dass** jede der beiden Antennen (51, 52) drei Empfangskanäle umfasst, einen Summenkanal (Σ), einen Differenzkanal (Δ) und einen Kontrollkanal (Ω), wobei der Kontrollkanal dem hinteren Strahlungselement (53, 54) zugeordnet ist, wobei die Signale von den Kanälen zu den Sende- und Empfangsmitteln der Subbaugruppen über das Drehgelenk (61) übertragen werden.

5. Sekundärradar nach einem der vorherigen Ansprüche, **dadurch gekennzeichnet, dass** jede der beiden Antennen (51, 52) zwei Empfangskanäle umfasst, einen Summenkanal (Σ) und einen Differenz- und Kontrollkanal (Δ/Ω), wobei der Differenz- und Kontrollkanal dem hinteren Strahlungselement (53, 54) zugeordnet ist, wobei die Signale von den Kanälen zu den Sende- und Empfangsmitteln der Subbaugruppen über das Drehgelenk (61) übertragen werden.

6. Radar nach einem der vorherigen Ansprüche, **dadurch gekennzeichnet, dass** die erste Antenne (51) vom LVA-Typ ist und die zweite Antenne (52) vom Balkentyp ist.

7. Radar nach einem der Ansprüche 1 bis 5, **dadurch gekennzeichnet, dass** die erste Antenne (51) vom LVA-Typ ist und die zweite Antenne (52) vom LVA-Typ ist.

8. Radar nach einem der Ansprüche 1 bis 5, **dadurch gekennzeichnet, dass** die erste Antenne (51) vom Balkentyp ist und die zweite Antenne (52) vom Balkentyp ist.

9. Sekundärradar nach einem der vorherigen Ansprüche, **dadurch gekennzeichnet, dass** es eine Masseebene und/oder eine Mikrowellenabsorptionskomponente umfasst, die die beiden Antennen (51, 52) trennt, wobei die Isolierung zwischen den beiden Antennen (51, 52) durch die Masseebene und/oder die Mikrowellenabsorptionskomponente erhöht wird.

10. Sekundärradar nach einem der vorherigen Ansprüche, **dadurch gekennzeichnet, dass** die Subbaugruppen (60, 70) Abfragesignale (91, 92) auf asynchrone Weise zwischen den von einer Subbaugruppe (60) gesendeten Abfragesignalen in Bezug auf die von der anderen Subbaugruppe (70) gesendeten Abfragesignale senden.

11. Sekundärradar nach einem der vorherigen Ansprüche, **dadurch gekennzeichnet, dass** die erste Subbaugruppe (51, 53, 61, 60) unabhängig eine Mode S Überwachungsfunktion ausführt und die zweite Subbaugruppe (52, 54, 61, 70) eine Freund/Feind-Erkennungsfunktion IFF ausführt.

12. Radarsystem, das ein Primärradar (11, 13) und ein Sekundärradar umfasst, **dadurch gekennzeichnet, dass** das Sekundärradar ein Sekundärradar nach einem der vorherigen Ansprüche ist.

13. Radarsystem nach Anspruch 12, **dadurch gekennzeichnet, dass** die Antenne (51) der ersten Subbaugruppe (60) des Sekundärradars, das die Überwachungsfunktion ausführt, in dieselbe Richtung zeigt wie die Primärantenne (11), wobei das System eine Hauptfunktion des Überwachens hat.

14. Radarsystem nach Anspruch 12, **dadurch gekennzeichnet, dass** die Antenne (52) der ersten Subbaugruppe (70) des Sekundärradars, das die Freund/Feind-Erkennungsfunktion realisiert, in dieselbe Richtung zeigt wie die Primärantenne (13), wobei das System eine Hauptfunktion der Freund/Feind-Erkennung hat.

## Claims

1. Secondary radar, **characterised in that** it comprises at least one antenna system (50), a first sub-assembly (60) which includes means for transmitting, receiving and processing interrogation signals which carry out a radar surveillance function SSR and a second sub-assembly (70) which includes means for transmitting, receiving and processing interrogation signals which carry out a friend/foe radar identification function IFF, the two sub-assemblies (60, 70) operating simultaneously and independently of each other, the first sub-assembly SSR being coupled to a first antenna (51) of the system (50) which is capable of being moved in rotation via a rotating joint (61), and the second sub-assembly IFF being coupled to a second antenna (52) of the system (50) via the rotating joint, the two antennae (51, 52) being fixedly mounted back-to-back, a rear radiating element (53) which constitutes the first antenna (51) being placed in the plane of the second antenna (52), a radiating element (54) which constitutes the second antenna (52) being placed in the plane of the first antenna (51).

2. Secondary radar according to claim 1, **characterised in that** the two antennae (51, 52) and the two sub-assemblies (60, 70) use common mechanical, energy and civil engineering resources.

3. Secondary radar according to either of the preceding claims, **characterised in that** the two sub-assemblies (60, 70) are arranged in the same cabin.

4. Secondary radar according to any one of the preceding claims, **characterised in that** each of the two antennae (51, 52) comprises three receiving channels, a sum channel (Σ), a difference channel (Δ) and a control channel (Ω), the control channel being assigned to the rear radiating element (53, 54), the signals originating from the channels being transferred to the transmitting and receiving means of the sub-assemblies via the rotating joint (61).

5. Secondary radar according to any one of the preceding claims, **characterised in that** each of the two antennae (51, 52) comprises two receiving channels, a sum channel (Σ) and a difference and control channel (Δ/Ω), the difference and control channel being assigned to the rear radiating element (53, 54), the signals originating from the channels being transferred to the transmitting and receiving means of the sub-assemblies via the rotating joint (61).

6. Radar according to any one of the preceding claims, **characterised in that** the first antenna (51) is of the LVA type and the second antenna (52) is of the beam type.

7. Radar according to any one of claims 1 to 5, **characterised in that** the first antenna (51) is of the LVA type and the second antenna (52) is of the LVA type.

8. Radar according to any one of claims 1 to 5, **characterised in that** the first antenna (51) is of the beam type and the second antenna (52) is of the beam type.

9. Secondary radar according to any one of the preceding claims, **characterised in that** it comprises a ground plane and/or a hyperfrequency absorbent which separates the two antennae (51, 52), the insulation between the two antennae (51, 52) being increased by the ground plane and/or the hyperfrequency absorbent.

10. Secondary radar according to any one of the preceding claims, **characterised in that** the sub-assemblies (60, 70) transmit interrogation signals (91, 92) in an asynchronous manner between the interrogation signals transmitted by a sub-assembly (60) relative to the interrogation signals transmitted by the other sub-assembly (70).

11. Secondary radar according to any one of the preceding claims, **characterised in that** independently the first sub-assembly (51, 53, 61, 60) carries out a surveillance function Mode S and the second sub-assembly (52, 54, 61, 70) carries out a friend/foe identification function IFF.

12. Radar system comprising a primary radar (11, 13) and a secondary radar, **characterised in that** the secondary radar is a secondary radar according to any one of the preceding claims.

13. Radar system according to claim 12, **characterised in that** the antenna (51) of the first sub-assembly (60) of the secondary radar which carries out the surveillance function is pointed in the same direction as the primary antenna (11), the system having a principal surveillance function.

14. Radar system according to claim 12, **characterised in that** the antenna (52) of the second sub-assembly (70) of the secondary radar which carries out the friend/foe identification function is pointed in the same direction as the primary antenna (13), the system having a principal friend/foe identification function.
